Europäisches Patentamt

European Patent Office

Office européen des brevets

(11) Publication number: **0 400 526**
**A1**

# EUROPEAN PATENT APPLICATION

(21) Application number: 90110060.2

(51) Int. Cl.5: **C01B 31/14, B01J 20/20**

(22) Date of filing: 28.05.90

(30) Priority: 29.05.89 JP 135536/89
17.01.90 JP 6360/90
07.02.90 JP 25921/90
21.05.90 JP 129247/90

(43) Date of publication of application:
**05.12.90 Bulletin 90/49**

(84) Designated Contracting States:
**DE FR GB**

(71) Applicant: **KAWASAKI STEEL CORPORATION**
**1-28, Kitahonmachi-dori 1-Chome**
**Chuo-Ku, Kobe-Shi Hyogo-Ken(JP)**

(72) Inventor: **Hanatani, Seiji, c/o Technical**
**Research Division**
**Kawasaki Steel Corporation, 1,**
**Kawasaki-Cho**
**Chiba-City, Chiba Pref.(JP)**
Inventor: **Sumi, Shigeyuki, c/o Technical**
**Research Division**
**Kawasaki Steel Corporation, 1,**
**Kawasaki-Cho**
**Chiba-City, Chiba Pref.(JP)**
Inventor: **Kamishita, Mamoru, c/o Technical**
**Research Division**
**Kawasaki Steel Corporation, 1,**

**Kawasaki-Cho**
**Chiba-City, Chiba Pref.(JP)**
Inventor: **Miyoshi, Fumihiro, c/o Technical**
**Research Division**
**Kawasaki Steel Corporation, 1,**
**Kawasaki-Cho**
**Chiba-City, Chiba Pref.(JP)**
Inventor: **Ohsugi, Yukihiro, c/o Technical**
**Research Division**
**Kawasaki Steel Corporation, 1,**
**Kawasaki-Cho**
**Chiba-City, Chiba Pref.(JP)**
Inventor: **Nakai, Susumu, c/o Technical**
**Research Division**
**Kawasaki Steel Corporation, 1,**
**Kawasaki-Cho**
**Chiba-City, Chiba Pref.(JP)**
Inventor: **Fujishima, Ichiro, c/o Tokyo Head**
**Office**
**Kawasaki Steel Corp., 2-3, Uchisaiwai-cho**
**2-chome**
**Chiyoda-ku, Tokyo(JP)**

(74) Representative: **Patentanwälte Grünecker,**
**Kinkeldey, Stockmair & Partner**
**Maximilianstrasse 58**
**D-8000 München 22(DE)**

(54) **Spherical fibrous lump activated carbon and method of producing the same.**

(57) Spherical fibrous lump activated carbon is disclosed, which comprises a three-dimensionally reticulated structure composed of plural fibrous activated carbons and a binder and having a void fraction of 0.35-0.85. In the production of the spherical fibrous lump activated carbon, a fibrous carbon material is granulated into a spherical fibrous lump with the use of a medium containing a binder and the thus obtained spherical fibrous lump material is dried and, if necessary, infused, carbonized and activated.

## FIG_4

## SPHERICAL FIBROUS LUMP ACTIVATED CARBON AND METHOD OF PRODUCING THE SAME

The present invention relates to highly functional fibrous activated carbon used for prevention of pollution nuisance and environmental purification, and in the fields of food industry, petroleum industry and the like by taking advantage of its high adsorptivity and large surface area, and a method of producing the same.

Since activated carbon has innumerable micropores and large outer surface area per unit weight, it is possible to adsorb, maintain or separate various molecules in vapor phase and liquid phase. Therefore, activated carbon has hitherto been used as separator, eliminator, adsorbent, recovery agent, catalyst, catalyst carrier and the like by taking advantage of the above functions.

Activated carbon is historically old and has most generally been used in industry. Production technique thereof has been known, and activated carbon is roughly classified into powdery activated carbon of not more than 149 $\mu$m in particle diameter, granular activated carbon of about 1 mm to 5 mm in particle diameter and fibrous activated carbon. Methods of producing these activated carbons are roughly classified into a method of activation with gas and a method of activation with chemical reagents.

As compared with granular activated carbon, powdery activated carbon has such an advantage that the outer surface area per unit weight is large and the adsorption rate is high, but is liable to scatter so as to be difficult to handle and to be in danger of dust explosion. The powdery activated carbon further has larger fluid pass resistance, so that it is seldom used as a fixed bed, but generally used only in a batch process in which a solution to be treated is mixed with a proper amount of the powdery activated carbon and then filtered. That is, the powdery activated carbon is largely limited in its utilizing method.

On the other hand, as compared with powdery activated carbon, granular activated carbon has such an advantage that it is hard to scatter and is not in danger of dust explosion, so that it is easy to handle, and when it is used in a packed bed, it can be utilized in vapor phase and in liquid phase because of its small fluid pass resistance, and further reclaimed for use.

However, there is such a problem that void fractions of crushed granular activated carbon, granular activated carbon and spherical activated carbon are low.

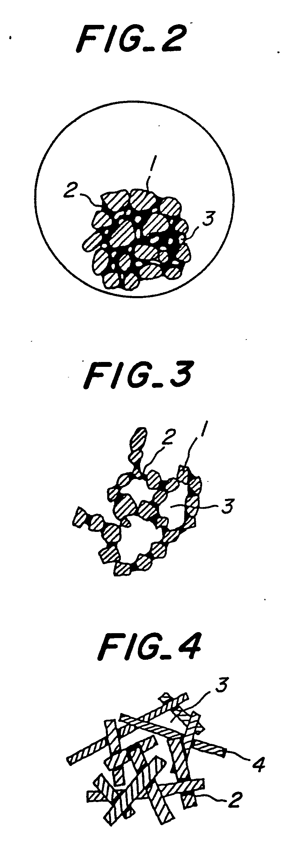

Herein, the void fraction, as shown in Fig. 2 for example, means such a ratio that the total volume of voids 3 surrounded by adjacent fine activated carbons 1 for constructing one granular activated carbon occupies the whole volume of the granular activated carbon, and more practically, such a ratio that the total volume of pores of not less than 100 Å in radius within one granular activated carbon occupies the whole volume of the granular activated carbon. These pores of not less than 100 Å in radius have almost no adsorption function, and mainly function as a channel when an adsorbate molecule moves to a highly adsorptive pore of not more than 100 Å in radius. Incidentally, the so-called micropore of not more than 20 Å in radius is especially high in adsorptivity. Therefore, a pore of not less than 100 Å in radius controls the diffusion rate of adsorbate molecule within a granular activated carbon particle, i.e., an adsorption rate.

The void fraction can easily be measured by a mercury intrusion process. For example, granular activated carbon as a sample is immersed in an acryl aqueous solution and the like, after which it is dried to form an acryl film on the surface of the granular activated carbon. Then, mercury is intruded into the resulting particles under the condition of 15 psia (normal pressure) by a mercury porosimeter. In this case, mercury does not permeate into the inside of each particle because of the presence of the acryl film, so that apparent volume of the particle can be obtained. Next, mercury is intruded into the same sample without the above immersing treatment under the condition of 10000 psia by a mercury porosimeter to thereby obtain void volume of the particle. Void fraction can be calculated from the resulting mercury-permeated volume corresponding to the whole volume of pores of not less than 100 Å in radius.

Since granular activated carbon is low such as 0.17-0.30 in void fraction, there are such disadvantages that diffusion of adsorbate is slow within the granular activated carbon, that practical adsorption capacity per unit weight is small, and that adsorption and desorption rates are low.

As a countermeasure against the above, there is considered to increase void fraction of granular activated carbon. For example, in case of crushed granular activated carbon, there is attempted to accelerate activation in activation process to thereby increase void fraction. In this case, however, only the surface layer of the crushed granular activated carbon is activated, so that the strength of the surface layer is lowered and as a result, the crushed granular activated carbon is apt to be crushed and powdered, which is not practical.

In case of granular activated carbon and spherical activated carbon, as shown in Fig. 2, they have such a structure that fine activated carbons 1 are bonded by a binder or an adhesive 2. In this case, a shape factor of fine ground products as a raw material is 0.53-1.0, so that the fine ground products are attempted to be loosely agglomerated for increasing void fraction. The thus obtained granular activated carbon particle (Fig. 3) is low in adhesivity of mutual fine ground products and thus easily powdered and not practical. The increase of a binder for increasing the strength is not advisable because the adsorptive surface area is decreased.

That is, in case of usual granular activated carbon and spherical activated carbon, it is difficult to increase void fraction. Therefore, granular activated carbon gives priority to practical merits such as handling properties and the like at the sacrifice of adsorptivity and adsorption and desorption rates.

On the contrary, fibrous activated carbon has a large outer surface area per unit weight and micropores of not more than 20 Å in radius on the surface thereof, so that the adsorption rate is extremely high and also the adsorption capacity per unit weight is large. But, its product form is usually limited to sheet, felt and chop-like shape (see Japanese Patent Laid-open No. 63-53,294, and Japanese Patent Laid-open No. 51-19,818), and a packed bed in which fibrous activated carbon is packed in high density shows extremely large fluid pass resistance, that is, pressure loss. Therefore, fibrous activated carbon should be used as a packed bed which void fraction is very largely controlled such as 0.90-0.95 (0.10-0.05 g/cc in packing density), and as a result, there are such disadvantages that its shape maintainability is low and it is apt to be powdered in handling. Moreover, large void fraction means small amount of the fibrous activated carbon per unit volume of packed bed, that is low packing density, so that the adsorption capacity per unit volume of packed bed is not so increased that properties of fibrous activated carbon cannot effectively be applied to practical use. That is, because of only micropores of not more than 20 Å in radius having high adsorptivity existent on the fibrous surface, it is impossible to effectively take advantage of properties such as high adsorption and desorption rates and high adsorptivity per unit weight of fibrous activated carbon.

In order to solve such disadvantage that low shape maintainability enhances powdering of fibrous activated carbon, Japanese Utility Model Laid-open No. 54-28,486 discloses a proposal of treating a fibrous adsorbent to form a yarn ball and using it. However, void fraction of the yarn ball-like fibrous adsorbent is equal to or higher than that of felt, so that even if resistance to powdering and handling properties are improved, the packing density is extremely low. That is, the fibrous adsorbent has no effect of increasing packing density and adsorptivity per unit packed volume.

On the other hand, Japanese Patent Laid-open No. 58-180,228 discloses a spherical adsorbent made by intertwining fibrous activated carbons of 0.5 mm-50 mm in length. However, the shape maintainability of the spherical adsorbent made only by intertwining fibrous activated carbons is low, and thus the activated carbon is inevitably powdered in case of using or handling. Particularly, the spherical adsorbent composed of fibrous activated carbons of less than 2 mm in length is very weak to intertwine because of its short length and as a result, the shape destruction and the powdering radically occur, which cannot be practically used.

An object of the invention is to provide highly functional fibrous activated carbon having high adsorptivity per unit volume of packed bed, high adsorptive and desorptive rates, easy handling, good shape maintainability and no powdering, and a method of producing the same by advantageously eliminating disadvantages of the above described prior activated carbons, such as powdery activated carbon, granular activated carbon, fibrous activated carbon, and spherical adsorbent composed of fibrous activated carbons.

The inventors have made various investigations in order to solve all the above problems, based on the conceptions stated below. That is, if fibrous activated carbons are three-dimensionally reticulated and such fibrous activated carbons are adhered to each other, shape maintainability, resistance to powdering and strength are considered to be increased, while if the reticulated fibrous activated carbons are formed into a spherical lump, its fluid pass resistance in packed bed is considered to be small. Moreover, the void fraction of a random packed bed of particles strongly correlates to a shape factor of particles in general (see Fluidization Engineering, 1969, John Wiley and Sons, Inc., p. 66), so that the void fraction of spherical fibrous lump can be controlled by the shape factor of fibers for constructing the lump, and as a result, it is considered to be possible to select the optimum void fraction, i.e. the optimum packing density and the optimum adsorption rate. The inventors have noted the aforementioned facts.

Herein, the shape factor $\phi_s$ is expressed by the following formula (1).

$$\phi_s = \frac{\text{Surface area of a sphere having the same volume as that of fiber}}{\text{Surface area of a fiber}} \quad \cdots\cdots (1)$$

Moreover, if the side surface area of fiber is ignored, the shape factor $\phi_s$ can be expressed as the following formula (2) with an aspect ratio L/D.

$$\phi_s = 1.31 \, (L/D)^{-\frac{1}{3}} \qquad (2)$$

The aspect ratio is a ratio of a length L to a diameter D of fiber, and when there are distributions of the length and the diameter of fiber, the ratio of respective arithmetic mean values is a mean aspect ratio. The thus obtained mean aspect ratio is noted for selecting the optimum void fraction.

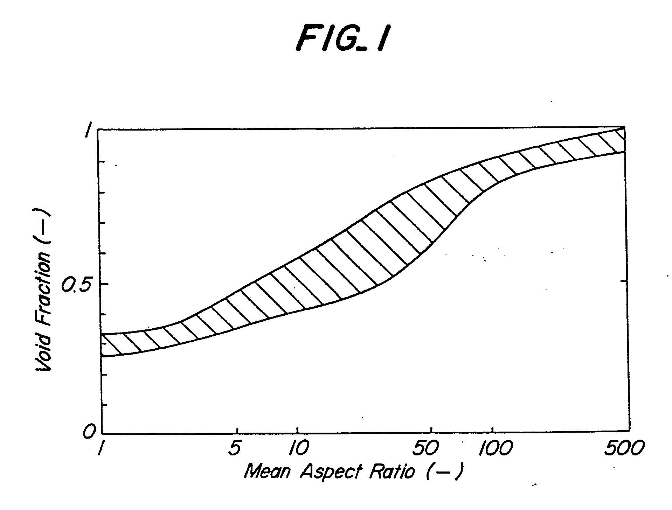

Therefore, granulation of a fibrous carbon material into a spherical fibrous lump with the use of a binder was attempted by mainly using a disintegrating granulation process. As a result, it was found that the fibrous carbon materials can be three-dimensionally reticulated, and as shown in Fig. 1. there is strong correlation between the mean aspect ratio of fiber and the void fraction of the spherical fibrous lump obtained therefrom.

The inventors have further made various investigation based on the above knowledge. and as a result. found that highly functional fibrous activated carbon having a shape of spherical lump (abbreviated as "spherical fibrous lump activated carbon" hereinafter) can be obtained by granulating fibrous carbon materials into a spherical fibrous lump with the use of a medium containing a binder, restricting a mean aspect ratio of the fibrous carbon materials for constructing the spherical fibrous lump to a predetermined range, further drying the thus obtained spherical fibrous lump by a heat treatment (inclusive of a binder curing treatment) to thereby adhere the fibrous carbon materials each other and. in case of using pitch fibers as a raw fiber material. to infuse the pitch fibers, and further passing the resulting lump through a carbonization-activation process unless fibrous activated carbons are used as a raw fiber material. whereby obtaining a three-dimensionally reticulated fibrous lump (see Fig. 4), and completed the present invention.

That is, the invention relates to spherical fibrous lump activated carbon, which comprises a three-dimensionally reticulated structure composed of plural fibrous activated carbons and a binder and having a void fraction of 0.35-0.85, and a method of producing the same.

The invention will be described with reference to the accompanying drawings, wherein:

Fig. 1 is a graph showing the relation between the mean aspect ratio and the void fraction of the spherical fibrous lump;

Fig. 2 is a cross-sectional view showing the condition of powdery activated carbon for constructing particles of a conventional granular activated carbon;

Fig. 3 is a cross-sectional view showing the condition of powdery activated carbons for constructing particles of conventional granular activated carbon when the void fraction is large;

Fig. 4 is an enlarged view schematically showing the condition of fibrous activated carbons for constructing a three-dimensionally reticulated structure according to the invention; and

Fig. 5 is a cross-sectional view showing the outline of the spherical fibrous lump activated carbon according to the invention in which fibrous activated carbons for constructing the outer peripheral portion are oriented substantially in parallel along the circumferential direction.

Spherical fibrous lump activated carbon and a method of producing the same according to the invention will be explained in detail as follows.

The spherical fibrous lump activated carbon according to the invention is required to be a three-dimensionally reticulated structure composed of fibrous activated carbons adhered to each other by a binder, and to have a void fraction of 0.35-0.85. The spherical fibrous lump activated carbon having a void fraction of less than 0.35 has excessive contact points of respective fibrous activated carbons. so that it is difficult for the binder to maintain the three-dimensionally reticulated structure and as a result. such characteristics of fibrous activated carbon that the outer surface area of one fibrous activated carbon is large is lost. On the other hand, the spherical fibrous lump activated carbon having a void fraction of more than 0.85 is apt to be powdered because of low strength, so as to lower its shape maintainability. and not to increase weight per unit packed volume, and as a result, the adsorption per unit packed volume cannot be improved.

In one preferred mode of the invention, the above spherical fibrous lump activated carbon is so constructed that the fibrous activated carbons for constructing the outer peripheral portion of the lump are oriented substantially in parallel along the circumferential direction, and the other fibrous activated carbons for constructing the inside are oriented at three-dimensional random. This largely improves resistance to wear and resistance to powdering.

Moreover, the diameter of the fibrous activated carbons for constructing the spherical fibrous lump activated carbon according to the invention is preferably 3-50 $\mu$m. The fibrous activated carbon which diameter exceeds 50 $\mu$m loses properties as fibrous activated carbon because of small outer surface area per unit weight. On the other hand. in case of using fibrous activated carbon having a diameter of less than 3 $\mu$m, spherical fibrous lump activated carbon can be produced, but its cost increases by a large margin and thus such expensive activated carbon is industrially unsuitable.

A method of producing spherical fibrous lump activated carbon according to the invention will be explained as follows.

As a raw fiber material, use may be made of pitch fiber, pitch infusible fiber, flame-resistant phenolic fiber, flame-resistant polyacrylonitrile fiber, rayon fiber and carbon fiber obtained by a carbonization treatment of these fibers and the like, and further fibrous activated carbon which has already activated. In case of using the fibrous activated carbon as a raw fiber material, as a binder, use may be made of carboxylmethylcellulose (CMC), starch, polyvinyl alcohol (PVA), phenolic adhesive, coal tar pitch and the like. Among them, a suitable one should be selected in consideration of the use environment and the reclaiming condition of the spherical fibrous lump activated carbon. In case of using fibrous carbon material with no activation treatment as a raw fiber material, a binder to be used should remain its function as a binder after activation treatment. Therefore, it is preferable to use a binder which residual carbon yield is not less than 20% after heat treatment at $700°C$ in inert atmosphere. If the residual carbon yield is less than 20%, the binder itself disappears in activation process and as a result, the shape maintainability of the obtained spherical fibrous lump activated carbon is low. As such preferred binders, mention may be made of phenolic resin, furan resin, epoxy resin, polyvinyl alcohol, coal tar pitch and the like. As a solvent for their binders, use may be made of organic solvents such as methanol, acetone and the like and aqueous solvents which may be emulsified in case of using water. It is preferable to select a binder usable in aqueous solvent system, viewed from economy and handling. Even in this case, however, a suitable binder should be selected in consideration of the use environment and the reclaiming condition of the spherical fibrous lump activated carbon.

Incidentally, the aforementioned residual carbon yield means a ratio (weight %) of weight of resin before heat-treatment to weight of carbon remained after heat-treating its resin at $700°C$ in inert atmosphere.

The step for granulating raw fiber materials into a spherical fibrous lump with the use of a binder can be attained by extruding granulation or disintegrating granulation. That is, it is possible to obtain a spherical fibrous lump material by admixing raw fiber materials with a medium containing a binder and, if necessary, a reinforcing material, subjecting the mixture to a disintegrating granulation or an extruding granulation, and continuously a tumbling treatment.

The mean aspect ratio of fibrous carbon materials or fibrous activated carbons for constructing the spherical fibrous lump activated carbons can be controlled to an optional value within the range of 2-100 in a process of admixing the raw fiber materials with the medium containing a binder during granulation. That is, if the strength of the raw fiber materials is so high that it can not be ground in the admixing process, the mean aspect ratio of the raw fiber materials is previously limited within the range of 2-100 by grinding, cutting and the like. On the other hand, if the strength of the raw fiber materials is so low that they are easily be ground by admixing, the admixing strength (admixing torque, admixing time and the like) is controlled according to the strength of the raw fiber materials. It is also possible to control the aspect ratio with the aid of the difference of the grinding difficulty in a mixture of at least two kinds of pitch fiber, pitch infusible fiber, flame-resistant phenolic fiber, flame-resistant polyacrylonitrile fiber, rayon fiber and carbon fiber. As this admixing device, use can be made of a mixer such as a kneader and the like.

The raw fiber materials after the admixing process become an integral lump material by the action of adhesion and cohesive force of the medium. In order to granulate the integral lump material, it is necessary to finely divide the lump material composed mainly of the raw fiber materials to the size close to the aimed grain size. As this method, disintegrating granulation (crush-granulation) or extruding granulation by a pelletizer are suitable. A fibrous lump obtained by employing this method maintains a strength durable for a tumbling as a post treatment, and the fibers for constructing the lump are oriented at completely three-dimensional random. As a disintegration granulation device, use may be made of a comminuting mill, a Fitz mill, a Flash mill and the like having a structure of finely dividing the raw fibrous lump material by a knife cutter and extruding it through a screen.

Since the thus obtained granulate is low in sphericity and bulky or cylindrical, it is necessary to make it spherical by applying a tumbling treatment. As this tumbling device, use may be made of a drum granulator and a pan granulator.

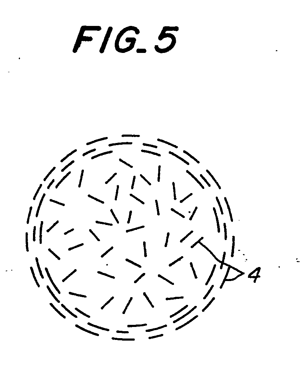

In case of this tumbling treatment, according to the tumbling condition, as shown in Fig. 5, not only the granulate can be made spherical, but also the fibers for constructing the outer peripheral layer of the granulate can be oriented substantially in parallel along the circumferential direction, while the other fibers for constructing the inside of the granulate remains oriented at three-dimensional random. That is, it can be attained by restricting a rotating circumferential speed of the drum granulator or the pan granulator to at least 5 m/s. When conducting the tumbling treatment at a rotating circumferential speed of less than 5 m/s, it is effective to make the granulate a spherical body, but is not so effective to orient the fibers for constructing the outer peripheral layer in parallel along the circumferential direction.

Next, the spherical fibrous lump material obtained after the tumbling treatment is subjected to a drying treatment including a binder curing, if necessary, an infusing treatment, and further a carbonization-activation treatment to thereby produce spherical fibrous lump activated carbon having a three-dimensionally reticulated structure.

In case of using no pitch fiber as a raw fiber material, the above infusing treatment is not required.

The infusing process mentioned herein is a treatment for preventing fiber shape from disappearing by the melting of heat-fusible pitch fiber at the post high temperature heat treatment process (carbonization-activation process), and can be carried out, for example, under oxidizing gas atmosphere such as air at a temperature of 150-350°C. Thereafter, spherical fibrous lump activated carbon can be obtained by carbonizing the infused pitch fibers for constructing the spherical fibrous lump material under inert atmosphere at a temperature up to 700°C, and then activating it under atmosphere including activation gas such as water vapor, carbon dioxide and the like at a temperature of 700-1000°C for 10-600 minutes.

As the drying, infusing and carbonizing-activating processes, it is possible to use a rotary kiln, a fluidized bed and the like.

Since the aforementioned spherical fibrous lump material is spherical in itself and three-dimensionally reticulated with a binder, it is the most suitable as fluidized particle, and thus can preferably be used in fluidized bed. Moreover, it is strong against shock and abrasion, so that the drying, infusing and carbonizing-activating processes can continuously be carried out in facilities, and there is scarcely generated process loss. Therefore, it is possible to assemble processes having very high production efficiency.

The spherical fibrous lump activated carbon obtained as described above is high in adsorption and desorption rates because of its larger void fraction, excellent in handling because of its spherical shape, and can be packed in every shape at high density. Moreover, because of very good shape maintainability, there is few loss in a fixed bed as well as in a fluidized bed at the time of use or reclaim, and further, regardless of liquid phase or vapor phase, it can be used for prevention of pollution nuisance, environmental purification and the like.

The following examples are given in the illustration of the invention and not intended as limitation thereof.

Measurements of void fraction in the following examples and comparative examples were conducted by a method of forming the above-described acryl film under the same measurement condition.

## Example 1

An optically isotropic pitch of 59% of benzene insoluble matter and a trace of quinoline insoluble matter was extrusion-spun to produce 1200 g of pitch fiber having a fiber diameter of 19 $\mu$m. 900 g of the pitch fiber was cut into chop having a fiber length of 3 mm, whereafter the chop was divided into three groups, each of which was mixed with 120 g of a medium controlled to 11% in phenolic resin content on the basis of a stock solution of phenolic resin (aqueous solvent, residual carbon yield of phenolic resin at 700°C: 55%). The mixing time was 1 minute, 2 minutes and 4 minutes to thereby obtain Samples A, B and C, respectively. Mean aspect ratios of respective Samples A, B and C were 50, 18 and 5, respectively.

Then, 150 g of carbon fiber of 1.5 mm in fiber length obtained by cutting coal tar pitch based carbon fiber of 19 $\mu$m in fiber diameter and 72 kgf/mm$^2$ in tensile strength, chop fiber of 3 mm in length obtained by cutting 150 g of the previously produced pitch fiber and 120 g of a medium prepared in the same manner as described above were mixed in the same kneader. The mixing time was 2 minutes to thereby obtain Sample D. A mean aspect ratio of Sample D was 32.

Next, these raw materials were disintegration-granulated by means of a Flush mill having a screen aperture of 3 mm, then tumble-treated in a Marumerizer (a bottom-tumbling granulator) at a rotating circumferential speed of 2 m/s for 3 minutes to thereby obtain each kind of spherical fibrous lump materials.

Then, each kind of these spherical fibrous lump materials was charged in a gas fluidizer of 100 mm in inner diameter, into which gas was blown by means of a dispersion plate, and continuously dried, infused, carbonized and activated under the condition having a fluidization velocity of 1.5 times as high as the incipiently fluidization velocity. Heat-up conditions and gas compositions are shown in the following Table 1.

Table 1

| | Heat-up pattern by hot air | Gas composition |
|---|---|---|
| Drying | 150°C (constant): 30 minutes | air |
| Infusing | 150°C-300°C: 6 hours | air |
| | 300°C (constant): 30 minutes | |
| Carbonizing | 300°C-800°C: 3 hours | nitrogen |
| Activating | 800°C (constant): 4 hours | nitrogen containing 33% water vapor |

Mean aspect ratios of fibrous activated carbons for constructing the thus obtained spherical fibrous lump activated carbons were 52 in Sample A, 19 in Sample B, 5 in Sample C and 36 in Sample D. Moreover, in Table 2 are shown BET specific surface area (measured by means of ASAP 2000-made by Micromeritix Co.), void fraction, mean grain diameter, adsorptivity, packing properties and fluidized bed powdering properties.

It is understood from Table 2 that if the spherical fibrous lump activated carbon has substantially the same packing density as that of granular activated carbon, its toluene adsorption per unit packed volume is fairly larger than that of granular activated carbon. It is further understood that the pressure loss of the spherical fibrous lump activated carbon is extremely low notwithstanding considerably higher packing density than that of felt.

It is also understood that the adsorption rate of the spherical fibrous lump activated carbon is about 10 times higher than that of granular activated carbon.

Further, it is understood that when the strength of fibrous carbon material as a raw fiber material is low, a mean aspect ratio of the fibrous carbon materials for constructing the spherical fibrous lump material can be controlled to any optional value by setting the mixing time depending on the strength of the fibrous carbon material.

It is furthermore understood that a mean aspect ratio can be controlled with the aid of the difference of the grinding difficulty of raw fiber material.

As a result, it is understood that the void fraction of the spherical fibrous lump activated carbon can be controlled to any optional value.

Comparative Example 1

In the same manner as in Example 1, an optionally isotropic pitch of 59% of benzene insoluble matter and a trace of quinoline insoluble matter was extrusion-spun to produce pitch fiber having a fiber diameter of 12 μm. 600 g of the pitch fiber was cut into chop having a fiber length of 6 mm, whereafter the chop was divided into two groups, each of which was mixed with 120 g of a medium controlled to 11% in phenolic resin content on the basis of a stock solution of phenolic resin (aqueous solvent, residual carbon yield in phenolic resin at 700°C: 55%). The mixing time was 30 seconds and 10 minutes, respectively.

Then, these raw materials were disintegration-granulated by means of a Flush mill, then tumble-treated in a Marumerizer at a rotating circumferential speed of 2 m/s for 3 minutes to thereby obtain Samples E and F of spherical fibrous lump materials, respectively. Mean aspect ratios of Samples E and F were 450 and 1.5, respectively.

Then, each kind of these spherical fibrous lump materials was changed in a gas fluidizer of 100 mm in inner diameter, into which gas was blown by means of a dispersion plate, and continuously dried, infused, carbonized and activated under the fluidized condition. Respective heat-up conditions and gas compositions are as shown in Table 1 in the same manner as in Example 1.

In Table 2 are shown specific surface area, void fraction, mean grain diameter, adsorptivity, packing properties and fluidized bed powdering properties of the obtained spherical fibrous lump activated carbons.

Besides, the yield of spherical fibrous lump activated carbon cbtained from Sample E was as low as 8% by weight because of powdering and scattering out. It is understood from Table 2 that properties of fibrous activated carbon are spoiled in case of a void fraction of less than 0.35.

Moreover, when the void fraction exceeds 0.85, the spherical fibrous lump activated carbon is liable to be powdered and its shape maintainability is lowered.

Table 2

| Sample | Examples | | | | Comparative Examples | | Granular activated carbon | Felt-like fibrous activated carbon |
|---|---|---|---|---|---|---|---|---|
| | A | B | C | D | E | F | | |
| Mean grain size (mm) | 2.6 | 2.4 | 2.5 | 2.7 | 7 | 2.2 | 4~6 | - |
| Specific surface area (m²/g-activated carbon) | 1500 | 1500 | 1500 | 1500 | 1500 | 600 | 1100 | 1500 |
| Void fraction (-) | 0.72 | 0.46 | 0.59 | 0.71 | 0.95 | 0.30 | - | - |
| Packing density of packed bed (g-activated carbon/cc-packed bed) | 0.21 | 0.37 | 0.28 | 0.22 | 0.05 | 0.43 | 0.36 | 0.10 |
| Equilibrium adsorption of toluene [1] (g-toluene/g-activated carbon) | 0.66 | 0.63 | 0.66 | 0.67 | 0.67 | 0.18 | 0.34 | 0.67 |
| Equilibrium adsorption of toluene per packed bed unit volume (g-toluene/cc-packed bed) | 0.14 | 0.23 | 0.18 | 0.14 | 0.03 | 0.07 | 0.14 | 0.07 |
| Pressure loss [2] (mm-Aq./cm-packed bed height) | 0.2 | 0.3 | 0.3 | 0.2 | 0.1 | 0.4 | 0.3 | 10.4 |
| Adsorption rate of toluene [3] (wt%/min) | 18 | 9 | 17 | 18 | 17 | 2.5 | 1.8 | 18 |
| Fluidized bed powdering properties [4] (wt%) | 96 | 98 | 97 | 96 | 30 | 98 | 94 | - |

Note:

1) Equilibrium adsorption is weight increase ratio when nitrogen gas containing 3700 ppm of toluene (25°C) is passed through a sample, and weight increase of the sample is stopped.

2) Pressure loss per unit height of a packed bed when nitrogen gas at 25°C is run through a packed bed at a rate of 10 cm/s.

3) Adsorption rate is a ratio of weight increase to time required for reaching 1/2 times the equilibrium adsorption in toluene of 5 mmHg (25°C).

4) Residual ratio of spherical fibrous lump activated carbon in fluidized bed when nitrogen gas of 1 atmospheric pressure at 25°C is run at a flow rate 2.0 times as high as the incipiently fluidization velocity for 24 hours.

EP 0 400 526 A1

### Example 2

1000 g of chopped infusibilized pitch fiber of 19 $\mu$m in diameter and 1.5 mm in length, was mixed with 400 g of a medium controlled to 11% in phenolic resin content on the basis of a stock solution of phenolic resin (aqueous solvent, residual carbon yield of phenolic resin at 700° C: 55%) by means of a kneader for 2 minutes. Then, the thus obtained sample was divided into two samples, one sample was disintegration-granulated in a Flush mill having a screen aperture of 3 mm, while the other sample was extrusion-granulated in a screw type radial discharge extruder having a screen aperture of 3 mm. Continuously, the samples were tumble-treated in a Marumerizer at a rotating circumferential rate of 2 m/s for 3 minutes to thereby obtain spherical fibrous lump materials, respectively.

The granulate obtained by means of a Flush mill was Sample G, and the other granulate obtained by means of a screw type radial discharge extruder was Sample H, respective mean aspect ratios being 26 and 11.

Next, these spherical fibrous lump materials were dried, carbonized and activated under the same condition as in Example 1 (infusing treatment was omitted). Mean aspect ratios of fibrous activated carbons for constructing the thus obtained spherical fibrous lump activated carbons were 27 in Sample G and 12 in Sample H. In Table 3 are shown specific surface area, void fraction, mean grain diameter, adsorptivity, packing properties and fluidized bed powdering properties.

### Example 3

Fibrous activated carbon of 12 $\mu$m in fiber diameter and 1500 m²/g in specific surface area was cut to obtain 200 g of fiber. To this fiber was added 100 g of a binder solution containing 4% by weight of polyvinyl alcohol, and kneaded and mixed by means of a kneader. Next, this mixed raw material was disintegration-granulated by means of a Flush mill having a screen aperture diameter of 6 mm, then tumble-treated in a Marumerizer at a rotating circumferential speed of 5 m/s for 5 minutes to thereby obtain a spherical fibrous lump material having a means aspect ratio of 100. Then, this lump material was dried under a hot air of 100° C for 10 minutes to thereby obtain spherical fibrous lump activated carbon, which was Sample I.

Table 3 shows specific surface area, void fraction, mean grain diameter, adsorptivity, packing properties and fluidized bed powdering properties of this Sample I.

### Example 4

An optically isotropic pitch of 57% of benzene insoluble matter and a trace of quinoline insoluble matter was extrusion-spun to produce pitch fiber of 19 $\mu$m in diameter. 300 g of the pitch fiber was cut into chop, whereafter the chop was mixed with 120 g of a medium controlled to 11% in phenolic resin content on the basis of a stock solution of phenolic resin (aqueous solvent, residual carbon yield of phenolic resin at 700° C: 55%) by means of a kneader. Then, the thus obtained raw material was granulated under the same condition as in Example 1 to thereby produce a spherical fibrous lump material consisting mainly of pitch fiber. In this case, a Flush mill was used with a screen aperture of 3 mm. Moreover, a rotating circumferential speed of the Marumerizer was 5 m/s.

Continuously, the spherical fibrous lump material was subjected to drying, infusing, carbonizing and activating treatments under the same condition as in Example 1, to produce spherical fibrous lump activated carbon, which was Sample J.

A mean aspect ratio of fibrous activated carbons for constructing Sample J was 18. Table 3 shows specific surface ratio, void fraction, mean grain diameter, adsorptivity, packing properties and fluidized bed powdering properties of Sample J.

Observing a cross-section of the Sample J by microscope, it was found that fibrous activated carbons in the outer peripheral layer of the spherical fibrous lump activated carbon was substantially oriented in parallel along the circumferential direction, and the other fibrous activated carbons in the inside thereof were oriented at three-dimensional random. That is, as the rotating circumferential speed at the time of tumbling treatment was restricted to 5 m/s, the fibrous activated carbons in the outer peripheral layer could be

EP 0 400 526 A1

oriented substantially in parallel along the circumferential direction. Moreover, it is understood from Table 3 that resistance to powdering is improved by this treatment.

Example 5

Coal tar pitch based carbon fiber of 17 μm in diameter was cut into length of 1 mm to obtain 1000 g chopped fiber. 500 g of the carbon fiber was mixed with 200 g of a medium controlled to 15% in phenolic resin content on the basis of a stock solution of phenolic resin (aqueous solvent, residual carbon yield of phenolic resin at 700°C: 25%) by means of a kneader for 4 minutes. Then, the thus mixed raw material was extrusion-granulated by means of a transverse extrusion pelleter having a screen aperture of 3 mm, and then tubmle-treated in a Marumerizer at a rotating circumferential speed of 2 m/s for 3 minutes to thereby obtain a spherical fibrous lump material. This lump material was dried and activated under the same condition as in Example 2 to thereby obtain spherical fibrous lump activated carbon, which was Sample K.

On the other hand, 500 g of the residual carbon fiber was mixed with an aqueous solution of 15% polyvinyl alcohol (PVA) (residual carbon yield of PVA at 700°C: 16%) by means of a kneader for 4 minutes in the same manner as the above. Then, the thus mixed raw material was extrusion-granulated by means of a screw type radial discharge extruder having a screen aperture of 3 mm, then tumble-granulated in a Marumerizer at a rotating circumferential speed of 2 m/s for 3 minutes to thereby obtain a spherical fibrous lump material. This lump material was dried and activated under the same condition as in Example 2 to thereby obtain spherical fibrous lump activated carbon, which was Sample L.

A mean aspect ratio of fibrous activated carbons for constructing Sample K was 25. Moreover, a mean aspect ratio of fibrous activated carbons for constructing Sample L was the same as that of Sample K.

Table 3 shows specific surface area, void fraction, mean grain diameter, adsorptivity, packing properties and fluidized bed powdering properties of Samples K and L.

It is understood from Table 3 that Sample L has the same mean aspect ratio and void fraction as those of Sample K, but the strength of Sample L is lower than that of Sample K, and as a result Sample L is easily powdered and the residual ratio of Sample L in fluidized bed is 82%. That is, with the use of a binder which residual carbon yield at 700°C is not less than 20%, ability as a binder is sufficiently maintained after activation.

Table 3

| Sample | Example 2 | | Example 3 | Example 4 | Example 5 | |
|---|---|---|---|---|---|---|
| | G | H | I | J | K | L |
| Mean grain size (mm) | 2.4 | 2.9 | 5.0 | 2.4 | 2.9 | 2.8 |
| Specific surface area (m² g-activated carbon) | 1500 | 1500 | 1500 | 1500 | 1460 | 1460 |
| Void fraction (-) | 0.61 | 0.46 | 0.82 | 0.48 | 0.58 | 0.58 |
| Packing density of packed bed (g-activated carbon/cc packed bed) | 0.27 | 0.37 | 0.21 | 0.35 | 0.30 | 0.30 |
| Equilibrium adsorption of toluene (g-toluene·g-activated carbon) | 0.67 | 0.65 | 0.66 | 0.63 | 0.64 | 0.64 |
| Equilibrium adsorption of toluene per packed bed unit volume (g-toluene/cc-packed bed) | 0.18 | 0.24 | 0.14 | 0.22 | 0.19 | 0.19 |
| Pressure loss (mm-Aq.cm-packed bed height) | 0.3 | 0.2 | 0.1 | 0.3 | 0.2 | 0.2 |
| Adsorption rate of toluene (wt% min) | 17 | 12 | 23 | 12 | 16 | 16 |
| Fluidized bed powdering properties (wt%) | 96 | 98 | 98 | 99 | 94 | 82 |

10

As explained above, the spherical fibrous lump activated carbon according to the invention has merits of both granular activated carbon and fibrous activated carbon, and also has effects such as high adsorptivity, high adsorption and desorption rates, excellent handling properties and shape maintainability, and extremely low fluid pass resistance. Moreover, when the producing method according to the invention is employed, the spherical fibrous lump activated carbon according to the invention can easily and efficiently be produced.

Therefore, such spherical fibrous lump activated carbon satisfies the condition as activated carbon which can widely be utilized in the industrial field, can be used not only for preventing pollution nuisance and environmental purification, but also in the fields of food industry, petroleum industry and the like, and is extremely useful as being inevitable to industry.

## Claims

1. Spherical fibrous lump activated carbon, which comprises a three-dimensionally reticulated structure composed of plural fibrous activated carbons and a binder and having a void fraction of 0.35-0.85.

2. The spherical fibrous lump activated carbon according to claim 1, wherein the mean aspect ratio of said fibrous activated carbons is within a range of 2-100.

3. The spherical fibrous lump activated carbon according to claim 1, wherein the diameter of said fibrous activated carbons is within a range of 3-50 $\mu$m.

4. The spherical fibrous lump activated carbon according to claim 1, wherein the fibrous activated carbons for constructing the outer peripheral layer of the lump are oriented substantially in parallel along the circumferential direction, and the other fibrous activated carbons for constructing the inside are oriented at three-dimensional random.

5. A method of producing spherical fibrous lump activated carbon according to claim 1, which comprises granulating pitch fiber as a raw fiber material with a medium containing a binder by disintegrating granulation or extruding granulation, tumble-treating the resulting granulate to produce a spherical fibrous lump material, and continuously drying, infusing and carbonizing-activating the spherical fibrous lump material.

6. The method according to claim 5, wherein said granulate is tumble-treated at a rotating circumferential speed of at least 5 m/s to orient pitch fibers for constructing the outer peripheral layer of said spherical fibrous lump material substantially in parallel along the circumferential direction.

7. A method of producing spherical fibrous lump activated carbon according to claim 1, which comprises granulating at least one selected from the group consisting of pitch infusible fiber, flame-resistant phenolic fiber, flame-resistant polyacrylonitrile fiber and rayon fiber, or a mixture thereof with carbon fiber as a raw fiber material, with a medium containing a binder by disintegrating granulation or extruding granulation, tumble treating the resulting granulate to produce a spherical fibrous lump material, and continuously drying and carbonizing-activating the spherical fibrous lump material.

8. The method according to claim 7, wherein said granulate is tumble-treated at a rotating circumferential speed of at least 5 m/s to orient raw fiber materials for constructing the outer peripheral layer of said spherical fibrous lump material substantially in parallel along the circumferential direction.

9. A method of producing spherical fibrous lump activated carbon according to claim 1, which comprises granulating carbon fiber as a raw fiber material with a medium containing a binder by disintegrating granulation or extruding granulation, tumble-treating the resulting granulate to produce a spherical fibrous lump material, and continuously drying and activating the spherical fibrous lump material.

10. The method according to claim 9, wherein said granulate is tumble-treated at a rotating circumferential speed of at least 5 m/s to orient carbon fibers for constructing the outer peripheral layer of said spherical fibrous lump material substantially in parallel along the circumferential direction.

11. The method according to any of the preceding claims 5-10, wherein after heat-treating said binder at 700 °C in inert atmosphere, the residual carbon yield is not less than 20%.

12. A method of producing spherical fibrous lump activated carbon according to claim 1, which comprises granulating fibrous activated carbon as a raw fiber material with a medium containing a binder by disintegrating granulation or extruding granulation, tumble treating the resulting granulate to produce a spherical fibrous lump material, and continuously drying the spherical fibrous lump material.

13. The method according to claim 12, wherein said granulate is tumble-treated at a rotating circumferential speed of at least 5 m/s to orient fibrous activated carbons for constructing the outer peripheral layer of said spherical fibrous lump material substantially in parallel along the circumferential direction.

14. The method according to any of preceding claims 5-10 and 12, 13, wherein the void fraction of the spherical fibrous lump activated carbon is controlled by controlling the mean aspect ratio of the raw fiber material in the granulation process.

15. The method according to any of preceding claims 5-10 and 12, 13, wherein the mean aspect ratio of the raw fiber material is controlled to within a range of 2-100 in the granulation process.

16. The method according to any of preceding claims 5-10 and 12, 13, wherein the raw fiber material has a mean aspect ratio of 2-100.

# FIG_1

# FIG_2

# FIG_3

# FIG_4

# FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | CHEMICAL ABSTRACTS, vol. 94, no. 22, june 1981, page 146, abstract no. 177462u, Columbus, Ohio, US; & JP-A-80 113 608 (KUREHA CHEMICAL INDUSTRY CO., LTD) 02-09-1980 * Abstract * | 1,5,9 | C 01 B 31/14 B 01 J 20/20 |
| A | IDEM | 2,3 | |
| Y | CH-A- 460 728 (FMC CORP.) * Column 4, lines 30-48; column 5, line 19 - column 6, line 8 * | 1,5,9 | |
| A | US-A-2 822 321 (PICKARD) * Column 2, line 55 - column 3, line 12 * | 1 | |
| A | PATENT ABSTRACTS OF JAPAN, vol. 13, n. 169 (C-587)[3517], 21st April 1989; & JP-A-63 319 025 (UNITIKA LTD) 27-12-1988 * Abstract * | 1 | TECHNICAL FIELDS SEARCHED (Int. Cl.5) C 01 B B 01 J |

The present search report has been drawn up for all claims

| Place of search | Date of completion of the search | Examiner |
|---|---|---|
| THE HAGUE | 13-08-1990 | WENDLING J.P. |